# EUROPÄISCHE PATENTSCHRIFT

(11) **EP 2 457 757 B1**
(45) Veröffentlichungstag und Bekanntmachung des Hinweises auf die Patenterteilung: **10.07.2013**
(21) Anmeldenummer: 09006271.2
(22) Anmeldetag: 08.05.2009
(51) Int. Cl.: B60J 7/12

(54) **Verdeck für ein Cabriolet-Fahrzeug mit einer gegenüber seitlichen Dachrahmen beweglichen Dachspitze**
Cover for a convertible vehicle with a roof tip movable relative to lateral roof frames
Capote pour un véhicule cabriolet doté d'un sommet de toit mobile par rapport à cadres latéraux de toit

(30) Priorität: 08.05.2008 DE 102008022824
(43) Veröffentlichungstag der Anmeldung: 30.05.2012
(73) Patentinhaber: Valmet Automotive Oy, 23500 Uusikaupunki (FI)
(72) Erfinder: Maaß, Joachim, 49143 Bissendorf (DE); Schnieder, Werner, 49124 Georgsmarienhütte (DE)
(74) Vertreter: Kronthaler, Schmidt & Coll.

(56) Entgegenhaltungen:
- EP-A2- 1 080 966
- DE-A1- 10 102 643
- DE-A1- 10 218 463

## Beschreibung

Die Erfindung betrifft ein Verdeck für ein Cabriolet-Fahrzeug, welches zwischen einer einen Fahrgastraum schließenden und einer den Fahrgastraum freigebenden Position verfahrbar ist, nach der im Oberbegriff des Patentanspruches 1 näher definierten Art.

Aus der DE 102 18 463 B4 ist ein Verdeck für ein Cabriolet-Fahrzeug bekannt, welches einen seitlichen Dachrahmen mit zumindest einem vorderen Dachrahmenstück und einem hinteren Dachrahmenstück aufweist. An dem vorderen Dachrahmenstück sind längsverschiebbar ein Frontspriegel und ein Spriegelelement aufgenommen, wobei das vordere Dachrahmenstück an einem Frontrahmen des Cabriolet-Fahrzeugs lösbar verriegelbar ist. Eine Bewegung des Frontspriegels aus einer ersten Öffnungsposition in eine zweite Öffnungsposition und eine Entriegelung des vorderen Dachrahmenstücks von dem Frontrahmen ist durch eine Zwangssteuerung miteinander verkoppelt.

Bei der vorgeschlagenen Lösung ist sowohl ein Antrieb zur Verschiebung des Frontspriegels von seiner an dem Frontrahmen angeordneten Position in seine erste Öffnungsposition als auch eine Antriebseinrichtung zur Bewegung des Verdecks zwischen seiner Öffnungsstellung und seiner schließstellung vorgesehen.

Es ist Aufgabe der vorliegenden Erfindung, ein Verdeck für ein Cabriolet-Fahrzeug, welches zwischen einer einen Fahrgastraum freigebenden Position und einer den Fahrgastraum schließenden Position verfahrbar ist und welches mit in einem fahrzeugfrontseitigen Bereich über eine Dachspitze verbundenen seitlichen Dachrahmen ausgebildet ist, zu schaffen, wobei das verdeck insbesondere für cabriolet-Fahrzeuge mit einem klein ausgebildeten heckseitigen Ablagebereich bzw. für Cabriolet-Fahrzeuge mit einem großen sich in Fahrzeuglängsrichtung erstreckenden Fahrgastraum einsetzbar ist, und wobei das Verdeck in einem konstruktiv einfachen Überführvorgang zwischen seiner Öffnungsstellung und seiner Schließstellung verfahrbar ist.

Diese Aufgabe wird bei einem Verdeck für ein Cabriolet-Fahrzeug der eingangs genannten Art gemäß den Merkmalen des kennzeichnenden Teils des Patentanspruches 1 gelöst.

Vorteilhafte Weiterbildungen eines Verdecks nach der Erfindung ergeben sich aus den Unteransprüchen.

Es wird somit ein Verdeck für ein Cabriolet-Fahrzeug vorgeschlagen, welches zwischen einer einen Fahrgastraum schließenden und einer den Fahrgastraum freigebenden, in einem heckseitigen Ablagebereich angeordneten Position verfahrbar ist, und welches mit jeweils einer Fahrzeugseite zugeordneten seitlichen Dachrahmen ausgebildet ist, welche bei geöffnetem Verdeck wenigstens bereichsweise einer Fahrzeugseite zugewandt neben Fahrzeugsitzen im heckseitigen Ablagebereich abgelegt und bei geschlossenem Verdeck an einer Windschutzscheibenbegrenzung festgelegt sind; wobei die seitlichen Dachrahmen jeweils ein vorderes Dachrahmenteil und wenigstens ein hinteres Dachrahmenteil bilden, von denen die vorderen Dachrahmenteile mittels einer in Fahrzeugquerrichtung verlaufenden Dachspitze verbunden sind, welche bei geschlossenem Verdeck an der Windschutzscheibenbegrenzung anliegt und bei geöffnetem Verdeck relativ gegenüber den vorderen Dachrahmenteilen heckwärts verlagert ist; und wobei die vorderen Dachrahmenteile bei in dem heckseitigen Ablagebereich abgelegtem Verdeck ebenso wie die Dachspitze ungewendet gegenüber ihrer Position bei geschlossenem Verdeck in dem heckseitigen Stauraum abgelegt sind.

Erfindungsgemäß ist dabei vorgesehen, dass die Dachspitze zwischen ihrer im Bereich der Windschutzscheibenbegrenzung angeordneten Position und ihrer Position bei geöffnetem Verdeck über den gesamten Bewegungsablauf mit einer Verdeckkinematik zwangsgekoppelt ist.

Ein erfindungsgemäßes verdeck hat den Vorteil, dass es sowohl bei Cabriolet-Fahrzeugen mit einem langen sich in Fahrzeuglängsrichtung erstreckenden und von dem Verdeck zu überspannenden Fahrgastraum als auch bei Cabriolet-Fahrzeugen mit einem in Fahrzeuglängsrichtung kurz ausgebildeten heckseitigen Ablagebereich einsetzbar ist, da die vorderen Dachrahmenteile bei in dem heckseitigen Ablagebereich abgelegtem Verdeck in einem jeweils einer Fahrzeugseite zugewandten Bereich neben Fahrzeugsitzen angeordnet sind. Sowohl die vorderen Dachrahmenteile als auch die hinteren Dachrahmenteile der seitlichen Dachrahmen können somit vorteilhafterweise eine große Länge in Fahrzeuglängsrichtung aufweisen.

Durch die zwangsgekoppelte Anbindung der Dachspitze über den gesamten Bewegungsablauf an eine Verdeckkinematik ist bei einem erfindungsgemäßen Verdeck vorteilhafterweise nur eine Antriebseinrichtung bei der Überführung des Verdecks zwischen seiner den Fahrgastraum schließenden und seiner den Fahrgastraum freigebenden Position nötig. Durch diese konstruktiv einfache Lösung kann vorteilhafterweise nicht nur Bauraum eingespart werden, sondern es werden auch die Herstellkosten für ein erfindungsgemäßes Verdeck reduziert.

Ein erfindungsgemäßes Verdeck ist bevorzugt als Soft-Top-Verdeck mit einem flexiblen Verdeckbezug ausgebildet, kann in einer hierzu alternativen Ausbildung der Erfindung aber auch als ein Hard-Top-verdeck ausgebildet sein.

Zur einfachen Bewegung der Dachspitze gegenüber den vorderen Dachrahmenteilen ist in einer vorteilhaften Ausbildung der Erfindung eine Führungseinrichtung vorgesehen, welche beispielsweise als eine Kulisseneinrichtung oder eine Viergelenkeinrichtung ausgebildet sein kann.

Eine einfache Ankopplung der Dachspitze an die Verdeckkinematik, welche mit einem verdeckgestänge herkömmlicher Art ausgebildet sein kann, kann in einer konstruktiv einfachen Ausgestaltung der Erfindung über eine Hebeleinrichtung realisiert sein, wobei die Hebeleinrichtung sowohl mit der Dachspitze als auch mit der Verdeckkinematik verbunden ist. Eine Bewegung der Verdeckkinematik zur Überführung des Verdecks zwischen seiner den Fahrgastraum schließenden und seiner den Fahrgastraum freigebenden Position bewirkt durch die Verbindung mit der Hebeleinrichtung eine Bewegung der Dachspitze, welche somit zwangsgesteuert über den gesamten Bewegungsablauf des Verdecks von der Verdeckkinematik bewegt wird.

Eine Relativbewegung der Dachspitze gegenüber den vorderen Dachrahmenteilen kann hierbei sowohl gleichmäßig über den gesamten Verdeckbewegungsablauf verteilt oder ungleichmäßig verteilt durchgeführt werden. Hierbei kann es insbesondere vorgesehen sein, dass die Bewegung der Dachspitze heckwärts gegenüber den vorderen Dachrahmenteilen bei einer Überführung des Verdecks von der geschlossenen Position in die offene Position bei sich ansonsten noch in geschlossener Position befindlichem Verdeck durchgeführt wird. Entsprechend könnte die Dachspitze bei einer Überführung des Verdecks von seiner offenen Position in seine geschlossene Position nach dem Erreichen der Schließstellung des Verdecks gegenüber den vorderen Dachrahmenteilen in Fahrzeugfrontrichtung bis zu ihrer Position der Windschutzscheibenbegrenzung, d. h. an der Windschutzscheibe, dem Windschutzscheibenrahmen und/oder den A-Säulen, durchgeführt werden.

Wenn die seitlichen Dachrahmen jeweils wenigstens zweiteilig oder jeweils dreiteilig mit insbesondere zwei hinteren Dachrahmenteilen oder jeweils wenigstens vierteilig mit insbesondere drei hinteren Dachteilen ausgebildet sind, kann das Verdeck vorteilhafterweise sehr flexibel an das jeweilige Cabriolet-Fahrzeug angepasst werden, wobei insbesondere ein von dem Verdeck zu überspannender sich in Fahrzeuglängsrichtung erstreckender Fahrgastraum sehr groß ausgebildet sein kann. Weiterhin kann hierdurch der von dem Verdeck in seiner Ablageposition in Fahrzeuglängsrichtung benötigte Stauraum vorteilhafterweise klein ausfallen.

Ein von dem sich in dem heckseitigen Ablagebereich befindlichen Verdeck benötigter Ablageraum kann bei einer vorteilhaften Ausbildung der Erfindung klein dimensioniert sein, wenn zwischen den seitlichen Dachrahmen angeordnete Spriegel und ein zur Spannung des Verdecks in Fahrzeuglängsrichtung bei sich in geschlossener Position befindlichem Verdeck vorgesehener Spannbügel hierbei im Wesentlichen unterhalb der Dachspitze angeordnet sind.

Zur Festlegung des Verdecks an der Windschutzscheibenbegrenzung kann es vorgesehen sein, dass die vorderen Dachrahmenteile, die in geschlossener Position des Verdecks an dem Windschutzscheibenrahmen oder den A-Säulen angeordnet sind, jeweils eine Verriegelungsvorrichtung aufweisen und mittels jeweils einer vorzugsweise in einem Bereich der vorderen Dachrahmenteile angeordneten Antriebseinrichtung verriegelbar sind. Die Dachspitze kann insbesondere durch die Führungseinrichtung gegenüber den vorderen Dachrahmenteilen in ihrer Position bei geschlossenem Verdeck gesichert werden.

In einer hierzu alternativen Ausbildung der Erfindung kann es auch vorgesehen sein, dass eine Antriebseinrichtung zur Betätigung der beiden den vorderen Dachrahmenteilen zugeordneten Verriegelungsvorrichtungen vorgesehen ist, welche in einem in Fahrzeugfrontrichtung weisenden Bereich insbesondere fahrzeugmittig an der Dachspitze angeordnet ist.

Weitere Vorteile und vorteilhafte Ausführungen eines Verdecks für ein Cabriolet-Fahrzeug nach der Erfindung ergeben sich aus der Zeichnung und der Beschreibung.

Nachfolgend sind vorteilhafte Ausführungsbeispiele eines erfindungsgemäß ausgestalteten Verdecks für ein Cabriolet-Fahrzeug anhand der Zeichnung prinzipmäßig beschrieben.

Es zeigt:
- Fig. 1: eine vereinfachte dreidimensionale Darstellung eines Cabriolet-Fahrzeugs mit einem Verdeck, welches in einer einen Fahrgastraum schließenden Position dargestellt ist;
- Fig. 2: eine stark vereinfachte Draufsicht auf einen Ausschnitt des Verdecks des Cabriolet-Fahrzeugs der Fig. 1, wobei eine in einem fahrzeugfrontseitigen Bereich an seitlichen Dachrahmen angeordnete Dachspitze ersichtlich ist;
- Fig. 3: eine stark vereinfachte Seitenansicht des Verdecks der Fig. 2, wobei eine als Kulisseneinrichtung ausgebildete Führungseinrichtung ersichtlich ist, mittels welcher die Dachspitze translatorisch gegenüber einem vorderen Dachrahmenteil des seitlichen Dachrahmens bewegbar ist;
- Fig. 4: eine Prinzipskizze eines alternativ ausgebildeten Verdecks in Seitenansicht, wobei eine Dachspitze mittels einer Viergelenkeinrichtung fahrzeugheckwärts gegenüber einem vorderen Dachrahmenteil von seitlichen Dachrahmen bewegbar ist;
- Fig. 5: eine vereinfachte dreidimensionale Darstellung des Verdecks der Figuren 1 bis 3 in Alleinstellung, wobei das Verdeck in einer Position dargestellt ist, welche zwischen der den Fahrgastraum schließenden Position und einer den Fahrgastraum freigebenden Position liegt;
- Fig. 6: eine dreidimensionale Darstellung des Verdecks der Fig. 5, wobei das Verdeck in der den Fahrgastraum freigebenden Position dargestellt ist;
- Fig. 7: eine stark vereinfachte schematische Seitenansicht des sich in der Ablageposition befindlichen Verdecks gemäß den Figuren 5 und 6;
- Fig. 8: eine stark vereinfachte der Fig. 2 entsprechende Darstellung des sich in seiner den Fahrgastraum freigebenden Position befindlichen Verdecks;
- Fig. 9: eine dreidimensionale Darstellung eines alternativ ausgebildeten Verdecks in einer den Fahrgastraum schließenden Position, wobei nur eine einer linken Fahrzeugseite zugeordnete Hälfte des Verdecks gezeigt ist;
- Fig. 10: eine der Fig. 9 entsprechende vereinfachte dreidimensionale Ansicht des Verdecks, wobei eine Dachspitze gegenüber vorderen Dachrahmenteilen heckwärts bewegt ist;
- Fig. 11: eine den Figuren 9 und 10 entsprechende dreidimensionale Darstellung des Verdecks, wobei das verdeck in einer Zwischenstellung zwischen einer geschlossenen Position und einer in einem heckseitigen Ablagebereich abgelegten Position gezeigt ist; und
- Fig. 12: eine vereinfachte Ansicht des Verdecks der Figuren 9 bis 11, wobei das Verdeck in der in dem heckseitigen Ablagebereich abgelegten Position gezeigt ist.

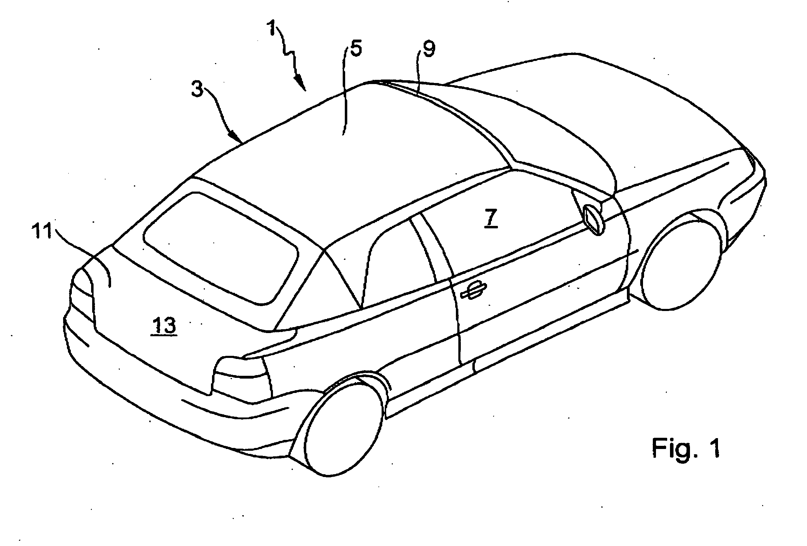

In Fig. 1 ist ein Cabriolet-Fahrzeug 1 mit einem als Soft-Top ausgebildeten verdeck 3 gezeigt, wobei das einen flexiblen Verdeckbezug 5 aufweisende Verdeck 3 in einer einen Fahrgastraum 7 überspannenden Position gezeigt ist, in welcher das Verdeck 3 sich von einer durch einen Windschutzscheibenrahmen 9 gebildeten Windschutzscheibenbegrenzung fahrzeugheckwärts bis zu einem Heckdeckel 11 erstreckt.

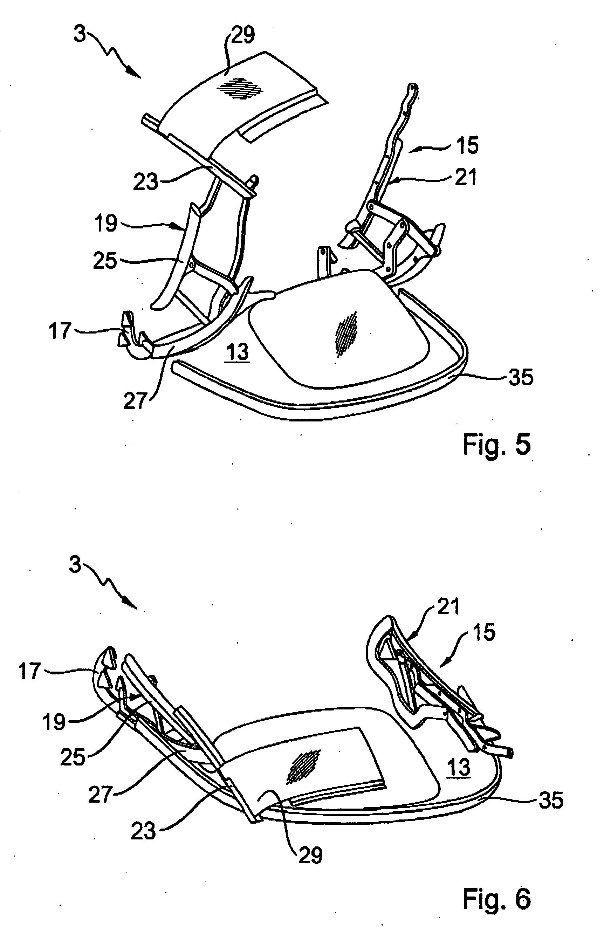

Das verdeck 3 kann hierbei über eine in der Fig. 5 dargestellten Zwischenposition in eine den Fahrgastraum 7 freigebende, in einem heckseitigen Ablagebereich 13 angeordnete Position verfahren werden, wobei der heckseitige Ablagebereich vorliegend als ein heckseitiger Stauraum 13 ausgebildet ist, welcher durch die als Heckdeckel 11 ausgebildete Deckeleinrichtung abschließbar ist.

Zur Überführung des Verdecks 3 zwischen seiner geschlossenen und seiner offenen Position ist eine nicht näher dargestellte Antriebseinrichtung vorgesehen, welche hierzu mit einer als Verdeckgestänge 15 ausgebildeten Verdeckkinematik zusammenwirkt.

Das Verdeckgestänge 15 ist bei sich in geschlossener Position befindlichem Verdeck 3 in einem heckseitigen Bereich des Verdecks 3 an ein Hauptlager 17 angebunden und mit jeweils einer Fahrzeugsseite zugeordneten seitlichen Dachrahmen 19, 21 ausgebildet, wobei die seitlichen Dachrahmen 19, 21 im Wesentlichen baugleich ausgebildet sind und im Folgenden ein der linken Fahrzeugseite zugeordneter Dachrahmen 19 stellvertretend für einen der rechten Fahrzeugseite zugeordneten Dachrahmen 21 beschrieben wird.

Der seitliche Dachrahmen 19 ist vorliegend dreiteilig mit einem vorderen Dachrahmenteil 23 und zwei hinteren Dachrahmenteilen ausgebildet, wobei ein erstes hinteres Dachrahmenteil 25 bei sich in geschlossener Position befindlichem Verdeck 3 fahrzeugheckwärts an das vordere Dachrahmenteil 23 anschließt und ein zweites hinteres Dachrahmenteil 27 in geschlossener Position des Verdecks 3 eine C-Säule bildend heckwärts hinter dem ersten hinteren Dachrahmenteil 25 angeordnet ist.

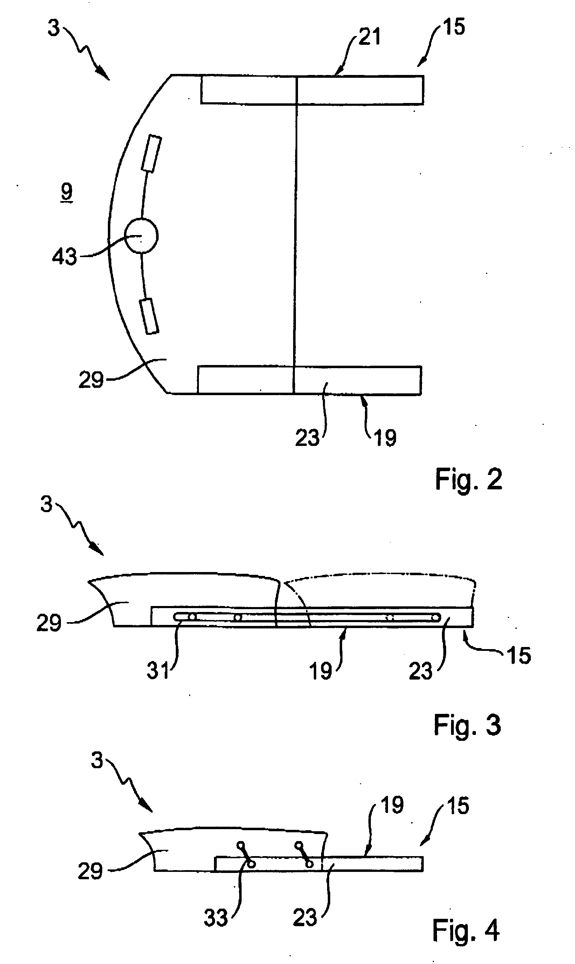

Die vorderen Dachrahmenteile 23 sind über eine Dachspitze 29 miteinander verbunden, welche gemäß der Fig. 2 bei geschlossener Position des Verdecks 3 an dem Windschutzscheibenrahmen 9 anliegt. Die Dachspitze 29 ist gegenüber den vorderen Dachrahmenteilen 23, wie in der Fig. 3 dargestellt, mittels einer als Kulisseneinrichtung 31 ausgebildeten Führungseinrichtung translatorisch in eine fahrzeugheckwärts bewegte Position verlagerbar, welche die Dachspitze 29 bei geändertem Verdeck 3 gegenüber den vorderen Dachrahmenteilen 23 einnimmt.

Zur Festlegung des Verdecks 3 in geschlossener Position ist eine nicht näher dargestellte verriegelungsvorrichtung vorgesehen, welche mittels einer nur schematisch in der Fig. 2 dargestellten Antriebseinrichtung 43 zwischen einer Schließstellung und einer eine Verdeckbewegung freigebenden Stellung verfahrbar ist. Das Verdeck 3 verzichtet auf die Möglichkeit einer Öffnung der Dachspitze 29 gegenüber den vorderen Dachrahmenteilen 23 während der Fahrt des Fahrzeugs. Es ist damit keine "Schiebedachfunktion" während der Fahrt des Fahrzeugs möglich, bei der die vorderen Dachrahmenteile 23 in ihrer Stellung am Windschutzscheibenrahmen 9 verbleiben und nur die Dachspitze 29 geöffnet wird. Durch die erfindungsgemäße Zwangskoppelung der Dachspitze 29 mit der Verdeckkinematik 15 ist eine Verlagerung der Dachspitze 29 immer nur dann möglich, wenn auch das Verdeck bewegt wird. Es ergibt sich daraus der große Vorteil, dass zur Festlegung des Verdecks 3 am Windschutzscheibenrahmen 9 keine separate Festlegung der vorderen Dachrahmenteile 23 am Windschutzscheibenrahmen 9 erforderlich ist. Hierdurch ergibt sich der ganz besondere Vorteil, dass als Verriegelungseinrichtung eine konventionelle Anordnung vorgesehen sein kann, wie sie dem Fachmann beispielsweise aus der DE 10 2005 015 165 A1 bekannt ist. Eine solche Verriegelungsanordnung weist zwei außermittig liegende verriegelungseinheiten auf, die von einer zentralen Antriebseinheit angetrieben werden. Die verriegelungseinheiten verriegeln dabei mit entsprechenden Verriegelungsgegenelementen, die am Windschutzscheibenrahmen angeordnet sind.

Die bevorzugte Ausgestaltung der Erfindung weist den in Figur 2 angedeuteten und vorstehend spezifizierten verschluss auf, der unabhängig vom Verdeckantrieb betätigt werden kann.

In Fig. 4 ist eine alternative Anordnung der Dachspitze 29 an den vorderen Dachrahmenteilen 23 gezeigt, wobei die Dachspitze 29 hierbei mittels einer als Viergelenkeinrichtung 33 ausgebildeten Führungseinrichtung fahrzeugheckwärts gegenüber den vorderen Dachrahmenteilen 23 verlagerbar ist, wobei die Dachspitze 29 auch hierbei eine in Fahrzeugfrontrichtung vordere Position bei geschlossenem verdeck 3 und eine in Fahrzeugheckrichtung verlagerte Position bei offenem verdeck 3 einnimmt.

Das Verdeck 3 wird über die Antriebseinrichtung Z-artig zwischen der den Fahrgastraum 7 schließenden und der den Fahrgastraum freigebenden Position verfahren, d. h. sowohl die Dachspitze 29 als auch die vorderen Dachrahmenteile 23 weisen in der Ablageposition des Verdecks 3 dieselbe Orientierung wie in der geschlossenen Position des Verdecks 3 auf. Sowohl die Dachspitze 29 wie auch die vorderen Dachrahmenteile 23 erfahren dabei im Wesentlichen keine Drehung gegenüber einer Fahrzeugbodenebene und weisen jeweils mit derselben Fläche in Fahrzeughochrichtung, mit der sie auch bei den Fahrgastraum schließender Position des Verdecks 3 nach oben weisen.

Die ersten hinteren Dachrahmenteile 25 und die zweiten hinteren Dachrahmenteile 27 werden bei der Überführung des Verdecks 3 zwischen der den Fahrgastraum schließenden Position und der den Fahrgastraum 7 freigebenden Position um wenigstens annähernd 180° gegenüber der Fahrzeugbodenebene gedreht, so dass die ersten hinteren Dachrahmenteile 25 und die zweiten hinteren Dachrahmenteile 27 in ihrer Ablageposition eine entgegengesetzten Orientierung zu den vorderen Dachrahmenteillen 23 aufweisen. Eine Außenkontur bildende Krümmung der vorderen Dachrahmenteile 23 und der hinteren Dachrahmenteile 25, 27 ist in Ablageposition des Verdecks 3 somit gegengleich zueinander angeordnet.

Die Dachspitze 29 ist über eine nicht näher dargestellte Hebeleinrichtung an das Verdeckgestänge 15 gekoppelt, so dass die Dachspitze 29 während der Überführung des Verdecks 3 zwischen seiner den Fahrgastraum schließenden Position und seiner den Fahrgastraum 7 freigebenden Position zwangsgesteuert gegenüber dem vorderen Dachrahmenteil 23 bewegt wird.

Die Zwangssteuerung ist dabei vorliegend derart ausgebildet, dass die Dachspitze 29 im Wesentlichen gleichmäßig über den gesamten Bewegungsablauf des Verdecks 3 verteilt gegenüber den seitlichen Dachrahmen 19, 21 bewegt wird. Ein separater Antrieb für die Bewegung der Dachspitze 29 gegenüber dem vorderen Dachrahmenteile 23 ist hierbei vorteilhafterweise nicht erforderlich.

In den Figuren 5 und 6 ist weiterhin ein Spannbügel 35 ersichtlich, welcher zur Spannung des Verdecks 3 in seiner den Fahrgastraum 7 überspannenden Position in Fahrzeuglängsrichtung vorgesehen ist. Sowohl der Spannbügel 35 als auch nicht näher dargestellte zwischen den seitlichen Dachrahmen 19 und 21 angeordnete in Fahrzeugquerrichtung verlaufende Spriegel sind bei sich in dem heckseitigen Stauraum 13 befindlichem Verdeck 3 im wesentlichen unterhalb der Dachspitze 29 angeordnet, so dass ein günstiges Package des Verdecks 3 in der Ablageposition erzielt ist.

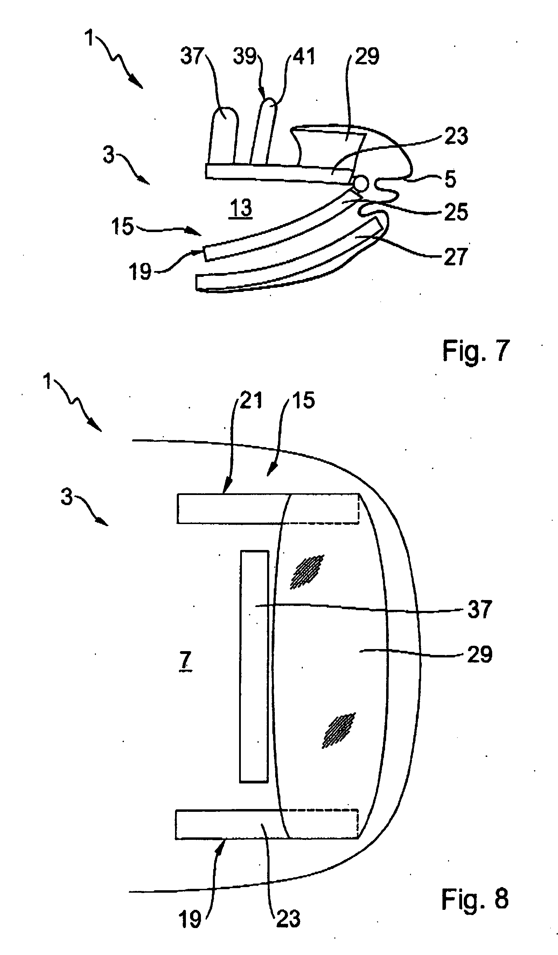

In den Figuren 7 und 8 ist das Verdeck 3 stark vereinfacht bei sich in dem heckseitigen Stauraum 13 befindlicher Position dargestellt, wobei jeweils ersichtlich ist, dass die Dachspitze 29 hierbei heckwärts hinter im Heckbereich des Cabriolet-Fahrzeugs 1 angeordneten Fahrzeugsitzen 37 und einem ebenfalls nur schematisch angedeuteten Überrollschutzsystem 39 mit einem Überrollkörper 41 angeordnet ist.

Wie insbesondere der Fig. 8 zu entnehmen ist, sind die vorderen Dachrahmenteile 23 wenigstens bereichsweise seitlich, d. h. in Richtung der jeweiligen Fahrzeugseite verlagert, neben den Fahrzeugsitzen 37 angeordnet. Die vorderen Dachrahmenteile 23 erstrecken sich bei sich in Ablageposition befindlichem Verdeck 3 somit gegenüber den Fahrzeugsitzen 37 über diese hinaus in Fahrzeugfrontrichtung, so dass der heckseitige Stauraum 13 vorteilhafterweise kurz ausgebildet werden kann.

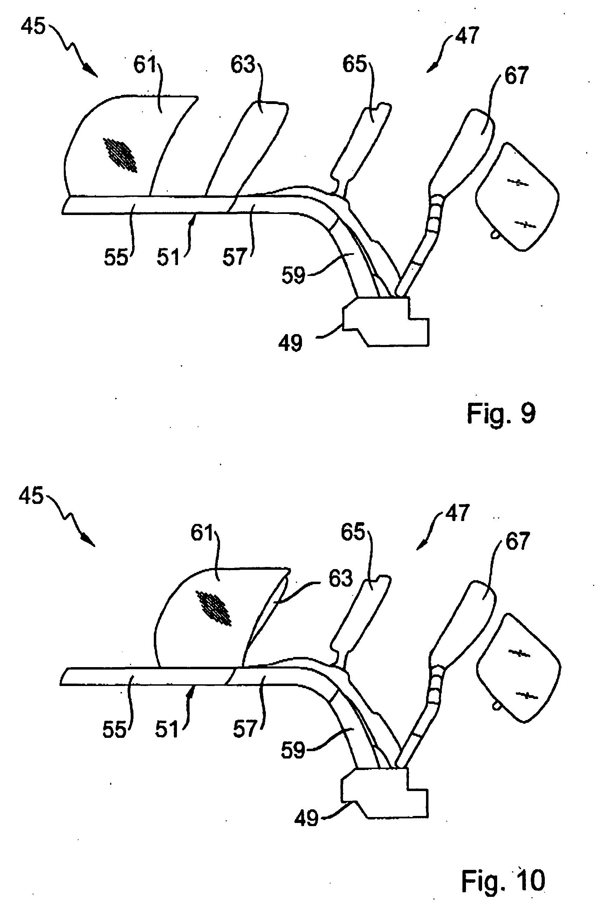

In den Figuren 9 bis 12 ist ein Verdeck 45 dargestellt, welches mit einem alternativ zu dem in den Figuren 5 und 6 dargestellten Bewegungsablauf zwischen seiner den Fahrgastraum 7 überspannenden Position in seiner den Fahrgastraum 7 freigebenden Position verfahrbar ist.

Das Verdeck 45 ist auch hier mittels einer als Verdeckgestänge 47 ausgebildeten Verdeckkinematik über eine Anlenkung an einem Hauptlager 49 zwischen seiner geschlossenen und seiner offenen Position bewegbar.

Das Verdeckgestänge 47 weist jeweils einer Fahrzeugseite zugeordnet einen seitlichen Dachrahmen auf, wobei ein einer linken Fahrzeugseite zugeordneter seitlicher Dachrahmen 51 und ein nicht näher ersichtlicher, einer rechten Fahrzeugseite zugeordneter seitlicher Dachrahmen im Wesentlichen baugleich ausgebildet sind und der der linken Fahrzeugseite zugeordnete seitliche Dachrahmen 51 im Folgenden stellvertretend für den der rechten Fahrzeugseite zugeordneten seitlichen Dachrahmen beschrieben wird.

Der seitliche Dachrahmen 51 ist analog zu dem oben beschriebenen Ausführungsbeispiel dreiteilig mit einem vorderen Dachrahmenteil 55, einem ersten hinteren Dachrahmenteil 57 und einem zweiten Dachrahmenteil 59 ausgebildet.

In einem in geschlossenem zustand des Verdecks 45 an dem Windschutzscheibenrahmen 9 angeordneten Bereich der vorderen Dachrahmenteile 55 sind die seitlichen Dachrahmen 51 über eine Dachspitze 61 miteinander verbunden. Heckwärts daran anschließend sind weitere die seitlichen Dachrahmen 51 in Fahrzeugquerrichtung verbindende Spriegel ausgebildet, wobei ein erster Spriegel 63 in einem fahrzeugheckseitigen Bereich der vorderen Dachrahmenteile 55, ein zweiter Spriegel 65 in einem heckseitigen Bereich der ersten hinteren Dachrahmenteile 57 und ein dritter Spriegel 67 in einem heckseitigen Bereich der zweiten hinteren Dachrahmenteile 59 angelenkt ist.

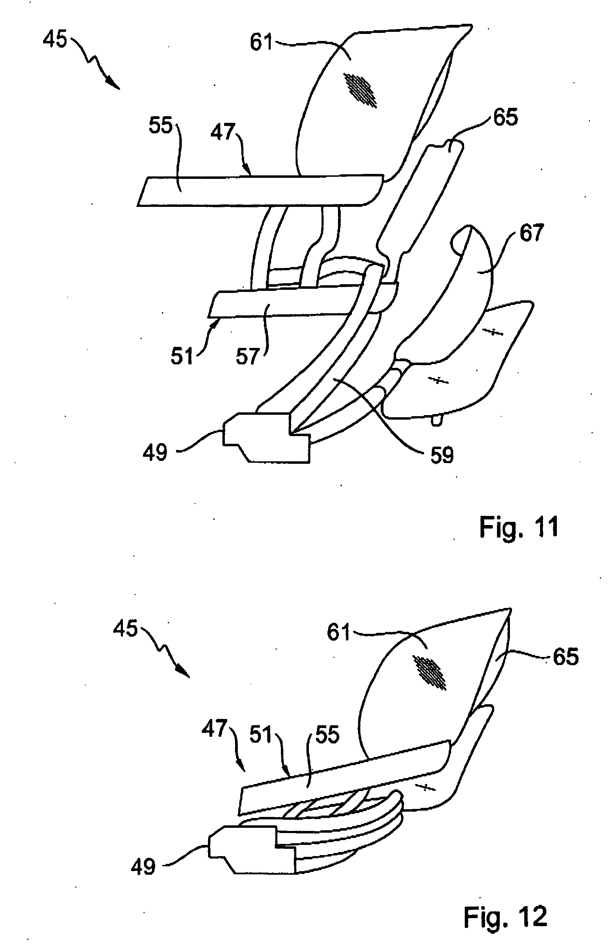

Bei einer Überführung des Verdecks 45 von seiner in der Fig. 9 dargestellten geschlossenen Position in seine offene Position, welche in der Fig. 12 dargestellt ist, wird die Dachspitze 61 über die nicht näher dargestellte, an das Verdeckgestänge 47 angebundene Hebeleinrichtung bewegt. Die Bewegung der Hebeleinrichtung wird dabei durch eine mittels der Antriebseinrichtung über das Verdeckgestänge 47 übertragene Bewegung bei noch an dem Windschutzscheibenrahmen 9 angeordneten seitlichen Dachrahmen 51 heckwärts gegenüber den seitlichen Dachrahmen 51 bewegt, bis die Dachspitze 61 in einem heckseitigen Bereich der vorderen Dachrahmenteile 55 im Wesentlichen oberhalb des ersten spriegels 63 gemäß der Fig. 10 angeordnet ist.

Durch eine Weiterbewegung des Verdeckgestänges 47 über die Antriebseinrichtung wird das Verdeck 45 mit seinen seitlichen Dachrahmen 51 über die in der Fig. 11 dargestellte Zwischenposition in den heckseitigen Stauraum 13 bewegt, wobei die seitlichen Dachrahmen 51 vorliegend derart ausgebildet sind, dass die vorderen Dachrahmenteile 55 und die ersten hinteren Dachrahmenteile 57 hierbei parallel zueinander, im Wesentlichen ohne eine Drehbewegung bewegt werden.

In der Ablageposition des Verdecks 45 sind die seitlichen Dachrahmen 51 mit den vorderen Dachrahmenteilen 55, den ersten hinteren Dachrahmenteilen 57 und den zweiten hinteren Dachrahmenteilen 59 jeweils einer Fahrzeugseite zugewandt neben in den Figuren 9 bis 12 nicht näher dargestellten Fahrzeugsitzen angeordnet.

## Patentansprüche

1. Verdeck für ein Cabriolet-Fahrzeug (1), welches zwischen einer einen Fahrgastraum (7) schließenden und einer den Fahrgastraum (7) freigebenden, in einem heckseitigen Ablagebereich (13) angeordneten Position verfahrbar ist, und welches mit jeweils einer Fahrzeugseite zugeordneten seitlichen Dachrahmen (19, 21, 51) ausgebildet ist, welche bei geöffnetem Verdeck (3, 45) wenigstens bereichsweise einer Fahrzeugseite zugewandt neben Fahrzeugsitzen (37) im heckseitigen Ablagebereich (13) abgelegt und bei geschlossenem Verdeck (3, 45) an einer Windschutzscheibenbegrenzung (9) festgelegt sind; wobei die seitlichen Dachrahmen (19, 21, 51) jeweils ein vorderes Dachrahmenteil (23, 55) und wenigstens ein hinteres Dachrahmenteil (25, 27, 55, 57) bilden, von denen die vorderen Dachrahmenteile (23, 55) mittels einer in Fahrzeugquerrichtung verlaufenden Dachspitze (29, 61) verbunden sind, welche bei geschlossenem Verdeck (3, 45) an der Windschutzscheibenbegrenzung (9) anliegt und bei geöffnetem Verdeck (3, 45) relativ gegenüber den vorderen Dachrahmenteilen (23, 55) heckwärts verlagert ist; und wobei die vorderen Dachrahmenteile (23, 55) bei in dem heckseitigen Ablagebereich (13) abgelegtem Verdeck (3, 45) ebenso wie die Dachspitze (29, 61) ungewendet gegenüber ihrer Position bei geschlossenem Verdeck (3, 45) in dem heckseitigen Stauraum (13) abgelegt sind,
**dadurch gekennzeichnet,**
**dass** die Dachspitze (29, 61) zwischen ihrer im Bereich der Windschutzscheibenbegrenzung (9) angeordneten Position und ihrer Position bei geöffnetem Verdeck (3, 45) über den gesamten Bewegungsablauf mit einer Verdeckkinematik (15, 47) zwangsgekoppelt ist.

2. Verdeck nach Anspruch 1, **dadurch gekennzeichnet, dass** die Dachspitze (29, 61) mittels einer Führungseinrichtung (31, 33) gegenüber den vorderen Dachrahmenteilen (23, 55) bewegbar ist.

3. Verdeck nach Anspruch 2, **dadurch gekennzeichnet, dass** die Führungseinrichtung als eine Kulisseneinrichtung (31) oder eine Viergelenkeinrichtung (33) ausgebildet ist.

4. Verdeck nach einem der Ansprüche 1 bis 3,
**dadurch gekennzeichnet,**
**dass** die Dachspitze (29, 61) über eine Hebeleinrichtung mit der Verdeckkinematik (15, 47) zusammenwirkt.

5. Verdeck nach einem der Ansprüche 1 bis 4,
**dadurch gekennzeichnet,**
**dass** die seitlichen Dachrahmen (19, 21, 51) jeweils wenigstens dreiteilig mit insbesondere zwei hinteren Dachrahmenteilen (25, 27, 57, 59) ausgebildet sind.

6. Verdeck nach einem der Ansprüche 1 bis 5
**dadurch gekennzeichnet,**
**dass** die seitlichen Dachrahmen (19, 21, 51) jeweils wenigstens vierteilig mit insbesondere drei hinteren Dachrahmenteilen ausgebildet sind.

7. Verdeck nach einem der Ansprüche 1 bis 6,
**dadurch gekennzeichnet,**
**dass** zwischen den seitlichen Dachrahmen (19, 21, 51) angeordnete Spriegel (63, 65, 67) bei in dem heckseitigen Ablagebereich (13) angeordnetem Verdeck (3, 45) im Wesentlichen unterhalb der Dachspitze (29, 61) angeordnet sind.

8. Verdeck nach einem der Ansprüche 1 bis 7,
**dadurch gekennzeichnet,**
**dass** ein zur Spannung des Verdecks (3, 45) in Fahrzeuglängsrichtung bei sich in geschlossener Position befindlichem Verdeck (3, 45) vorgesehener Spannbügel (35) bei in dem heckseitigen Ablagebereich (13) angeordnetem Verdeck (3, 45) im Wesentlichen unterhalb der Dachspitze (29, 61) angeordnet ist.

9. Verdeck nach einem der Ansprüche 1 bis 8,
**dadurch gekennzeichnet,**
**dass** in der Dachspitze (29, 61) eine Verdeckverschlusseinheit angeordnet ist, die die Dachspitze (29, 61) bei geschlossenem Dach an der Windschutzscheibenbegrenzung (9) festlegt und die unabhängig von der Verdeckkinematik (15, 47) betätigbar ist.

## Claims

1. A hood for a convertible vehicle (1), which can be moved between a position in which it covers a passenger compartment (7) and a position located in a rear stowage compartment (13), in which it uncovers the passenger compartment (7), said hood comprising lateral roof frames (19, 21, 51) respectively assigned to one side of the vehicle, said roof frames (19, 21, 51) being stowed in the rear stowage compartment (13) adjacent to vehicle seats (37), while at least partly facing one vehicle side, when the hood (3, 45) is open and being fixed to a windscreen border (9) when the hood (3, 45) is closed; wherein the lateral roof frames (19, 21, 51) respectively form a front roof frame part (23, 55) and at least one rear roof frame part (25, 27, 55, 57) of which the front roof frame parts (23, 55) are connected by a roof header (29, 61) extending in the transverse direction of the vehicle, said roof header (29, 61) abuts on the windscreen border (9) when the hood (3, 45) is closed and being displaced towards the rear relative to the front roof frame parts (23, 55) when the hood (3, 45) is open; and wherein, when the hood (3, 45) is stowed in the rear stowage compartment (13), the front roof frame parts (23, 55) as well as the roof header (29, 61) are stowed in the rear stowage compartment (13) without being reversed relative to their position when the hood (3, 45) is closed,
**characterised in that**
the roof header (29, 61) is forcibly coupled with a hood kinematic linkage assembly (15, 47) throughout its entire movement between its position located in the area of the windscreen border (9) and its position when the hood (3, 45) is open.

2. The hood according to claim 1, **characterised in that** the roof header (29, 61) can be moved with respect to the front roof frame parts (23, 55) by a guide device (31, 33).

3. The hood according to claim 2, **characterised in that** the guide device is provided as a slot guide device (31) or as a four-bar linkage device (33).

4. The hood according to any one of claims 1 to 3, **characterised in that** the roof header (29, 61) cooperates with the hood kinematic linkage assembly (15, 47) via a lever device.

5. The hood according to any one of claims 1 to 4, **characterised in that** the lateral roof frames (19, 21, 51) are each provided in at least three parts, in particular with two rear roof frame parts (25, 27, 57, 59).

6. The hood according to any one of claims 1 to 5, **characterised in that** the lateral roof frames (19, 21, 51) are each provided in at least four parts, in particular with three rear roof frame parts.

7. The hood according to any one of claims 1 to 6, **characterised in that** bows (63, 65, 67), arranged between the lateral roof frames (19, 21, 51), are arranged substantially below the roof header (29, 61) when the hood (3, 45) is arranged in the rear stowage compartment (13).

8. The hood according to any one of claims 1 to 7, **characterised in that** a tensioning bow (35), provided for tensioning the hood (3, 45) in the longitudinal direction of the vehicle when the hood (3, 45) is in the closed position, is arranged substantially below the roof header (29, 61) when the hood (3, 45) is arranged in the rear stowage compartment (13).

9. The hood according to any one of claims 1 to 8, **characterised in that** a hood fastening unit is arranged in the roof header (29, 61), which unit fixes the roof header (29, 61) to the windscreen border (9) when the roof is closed and which can be actuated independently of the hood kinematic linkage assembly (15, 47).

## Revendications

1. Capote pour un véhicule cabriolet (1), qui est déplaçable entre une position dans laquelle elle couvre un habitacle (7) et une position disposée dans un compartiment de rangement arrière (13) dans laquelle elle découvre l'habitacle (7), ladite capote comprenant des cadres de toit latéraux (19, 21, 51) respectivement associés à un côté du véhicule, qui sont rangés dans le compartiment de rangement arrière (13) au voisinage de sièges de véhicule (37) et au moins partiellement tournés vers un côté du véhicule lorsque la capote (3, 45) est ouverte, et qui sont fixés sur un bord de pare-brise (9) lorsque la capote (3, 45) est fermée; lesdits cadres de toit latéraux (19, 21, 51) constituant respectivement un élément de cadre de toit avant (23, 55) et au moins un élément de cadre de toit arrière (25, 27, 55, 57) dont les éléments de cadre de toit avant (23, 55) sont reliés au moyen d'un sommet de toit (29, 61) qui s'étend dans la direction transversale du véhicule, ledit sommet de toit (29, 61) jouxte à le bord de pare-brise (9) lorsque la capote (3, 45) est fermée et étant déplacé vers l'arrière par rapport aux éléments de cadre de toit avant (23, 55) lorsque la capote (3, 45) est ouverte; et lesdits éléments de cadre de toit avant (23, 55), ainsi que le sommet de toit (29, 61), étant rangés dans le compartiment de rangement arrière (13), lorsque la capote (3, 45) est rangée dans le compartiment de rangement arrière (13), sans inversion par rapport à leur position lors de la fermeture de la capote (3, 45),
**caractérisé en ce que**
le sommet de toit (29, 61) est couplé par force à une cinématique de capote (15, 47) pendant tout son déplacement entre sa position disposée au voisinage du bord de pare-brise (9) et sa position lors de l'ouverture de la capote (3, 45).

2. Capote selon la revendication 1, **caractérisé en ce que** le sommet de toit (29, 61) est déplaçable par rapport aux éléments de cadre de toit avant (23, 55) par un dispositif de guidage (31, 33).

3. Capote selon la revendication 2, **caractérisé en ce que** le dispositif de guidage est réalisé sous la forme d'un dispositif à coulisse (31) ou d'un dispositif à quatre articulations (33).

4. Capote selon l'une quelconque des revendications 1 à 3, **caractérisé en ce que** le sommet de toit (29, 61) coopère avec la cinématique de capote (15, 47) au moyen d'un dispositif à levier.

5. Capote selon l'une quelconque des revendications 1 à 4, **caractérisé en ce que** chaque cadre de toit latéral (19, 21, 51) est réalisé en au moins trois parties, comprenant notamment deux éléments de cadre de toit arrière (25, 27, 57, 59).

6. Capote selon l'une quelconque des revendications 1 à 5, **caractérisé en ce que** chaque cadre de toit latéral (19, 21, 51) est réalisé en au moins quatre parties, comprenant notamment trois éléments de cadre de toit arrière.

7. Capote selon l'une quelconque des revendications 1 à 6, **caractérisé en ce que** des arceaux (63, 65, 67), disposés entre les cadres de toit latéraux (19, 21, 51), sont disposés sensiblement au-dessous du sommet de toit (29, 61) lorsque la capote (3, 45) est disposée dans le compartiment de rangement arrière (13).

8. Capote selon l'une quelconque des revendications 1 à 7, **caractérisé en ce qu'**un étrier de tension (35), destiné à tendre la capote (3, 45) dans la direction longitudinale du véhicule lorsque la capote (3, 45) est en position fermée, est disposé sensiblement au-dessous du sommet de toit (29, 61) lorsque la capote (3, 45) est disposée dans le compartiment de rangement arrière (13).

9. Capote selon l'une quelconque des revendications 1 à 8, **caractérisé en ce qu'**une unité de verrouillage de capote est disposée dans le sommet de toit (29, 61), ladite unité fixant le sommet de toit (29, 61) sur le bord de pare-brise (9) lorsque le toit est fermé et pouvant être actionnée indépendamment de la cinématique de capote (15, 47).
